# EUROPEAN PATENT SPECIFICATION

(11) **EP 3 236 103 B1**
(45) Date of publication and mention of the grant of the patent: **02.06.2021**
(21) Application number: 15869839.9
(22) Date of filing: 08.12.2015
(51) Int. Cl.: B60N 2/20, B60N 2/22, F16F 9/12

(54) **DAMPER AND METHOD FOR MANUFACTURING DAMPER**
DÄMPFER UND VERFAHREN ZUR HERSTELLUNG EINES DÄMPFERS
AMORTISSEUR ET PROCÉDÉ DE FABRICATION D'UN AMORTISSEUR

(30) Priority: 16.12.2014 JP 2014254104
(43) Date of publication of application: 25.10.2017
(73) Proprietor: Nifco Inc., Kanagawa 239-8560 (JP)
(72) Inventor: MURANAKA, Makoto, Yokosuka-shi Kanagawa 239-8560 (JP)
(74) Representative: Dr. Gassner & Partner mbB
(86) International application number: PCT/JP2015/084365
(87) International publication number: WO 2016/098634

(56) References cited:
- EP-A1- 2 620 667
- EP-A2- 1 344 958
- WO-A1-2012/039182
- DE-T2- 60 022 699
- JP-A- H08 145 106
- JP-A- H08 145 106
- JP-A- H08 261 264
- JP-A- H10 299 809
- JP-A- H11 182 606
- JP-A- 2000 329 183
- JP-A- 2003 269 500
- JP-A- 2006 162 044
- JP-U- H0 742 882
- JP-U- H0 742 882

## Description

### Field of Technology

The present invention relates to a damper and a method for manufacturing the damper.

### Background Art

As for a damper buffering an impact torque, there is known a rotary damper attenuating an input torque of a rotor. In this type of damper, as for an attenuating medium attenuating a torque, usually, there is used a viscous fluid such as a silicone oil and the like which is a fluid having viscosity. A damping force generated by the damper is determined by a clearance between two members retaining the viscous fluid, for example, a housing which houses the rotor, and the rotor.

On the other hand, a temperature change in an environment wherein the damper is placed directly acts on the housing, and indirectly acts on the rotor housed in the housing. As a result, when the temperature change of the environment becomes large, the clearance between the housing and the rotor changes largely, and the damping force generated by the damper changes largely as well. In the aforementioned damper, in order to suppress a change of the clearance accompanied by the temperature change of the environment, there is proposed a technology of forming the housing by a material wherein a linear expansion coefficient is small, and forming the rotor by a material wherein the linear expansion coefficient is large (for example, see Patent Document 1).

### Prior Art Document

### Patent Document

Patent Document 1: Japanese Unexamined Patent Application Publication No. H03-163232

JP10299809 shows a damper with a torque generating zone filled with viscous liquid.

### Summary of the Invention

### Problems to be Solved by the Invention

The temperature change of the environment wherein the damper is placed, however, acts on the attenuating medium as well in addition to the housing or the rotor, and changes the viscosity of the attenuating medium. For example, in the damper comprising the housing made of resin wherein the linear expansion coefficient is large, when the temperature of the environment rises, in addition to an increase of the clearance, the viscosity of the viscous fluid declines. As a result, a decline of the damping force generated in the damper becomes notable. On the other hand, for example, in the damper comprising the housing made of metal wherein the linear expansion coefficient is small, an expansion of the viscous fluid such as the silicone oil and the like is suppressed by the housing, and an inner pressure of the housing rises so as to ensure the torque. However, in order to achieve a predetermined performance, it comes to a situation where an increase in number of steps in designing or manufacturing is inevitable, such that the aforementioned metal housing is considered to be adopted, and the like. Therefore, in the aforementioned damper, it is still strongly required to suppress the damping force from changing by the temperature change of the environment wherein the damper is placed.

An object of the present invention is to provide a damper wherein a stability of the damping force relative to the temperature change of the environment wherein the damper is placed is enhanced, and a method for manufacturing a damper.

### Means for Solving the Problems

Hereinafter, means for obtaining the aforementioned object and an operation effect thereof will be described.

A damper for obtaining the aforementioned object comprises the features of claim 1.

The method for manufacturing a damper for obtaining the aforementioned object, comprises the features of claim 7.

In the gel-like attenuating medium, the change in viscosity due to a temperature change is small compared to a viscous fluid such as silicone oil and the like. In this respect, according to the aforementioned respective structures, the housing and the cap are formed by the same principal material, so that the change due to the temperature change is small regarding the size of a gap between the movable member and the physical objects. Then, the attenuating medium is filled in the gap between the movable member and the physical objects, so that in a damping force generated by shearing the attenuating medium, stability is enhanced relative to the temperature change.

In the aforementioned damper, the cap may be welded to the housing.

According to the aforementioned structure, the cap welded to the housing is formed by the same principal material as the housing, so that regarding welding between the housing and the cap, strong stability is enhanced.

In the aforementioned damper, it is preferable that the principal material forming the movable member includes a linear expansion coefficient equal to the principal material forming the housing and the cap.

According to the aforementioned respective structures, the linear expansion coefficient of the principal material forming the housing and the linear expansion coefficient of the principal material forming the movable member are equal, so that regarding the size of a gap between the housing and the movable member, the change due to the temperature change is small. Also, the linear expansion coefficient of the principal material forming the cap and the linear expansion coefficient of the principal material forming the movable member are equal, so that regarding the size of a gap between the cap and the movable member as well, the change due to the temperature change is small. Therefore, in the damping force generated by shearing the attenuating medium, the stability is reliably enhanced relative to the temperature change.

The damper for obtaining the aforementioned object comprises the housing; the cap combined with the housing in a movable state relative to the housing; and the gel-like attenuating medium filled between the housing and the cap, and the housing and the cap are formed by the same principal material.

The method for manufacturing the damper for obtaining the aforementioned object includes a process for filling the raw material of the attenuating medium between the cap formed by the same principal material as the housing, and the housing, and combining the cap with the housing in the movable state relative to the housing; and the process for generating the attenuating medium by adding the viscoelasticity to the raw material inside the housing by the viscoelasticity treatment which is at least one of either leaving for the required time or the ultraviolet irradiation.

According to the aforementioned respective structures, the housing and the cap are formed by the same principal material, so that regarding the size of a gap between the housing and the cap, the change due to the temperature change is small. The attenuating medium is filled in the gap between the housing and the cap, so that regarding the damping force generated by shearing the attenuating medium, the stability is enhanced relative to the temperature change.

In the aforementioned damper, the attenuating medium is, for example, a silicone gel, and the same principal material may be, for example, any one of a thermoplastic resin, a thermosetting resin, and an ultraviolet curing resin as well.

In the aforementioned damper, a mechanism of turning a seat back relative to a seat cushion is a turning mechanism, and there may further include a shaft connection portion connected to a rotation shaft provided in the turning mechanism as well.

### Brief Description of the Drawings

Fig. 1 is a perspective view showing a whole structure after an assembly for a rotary damper in a first embodiment wherein a damper of the present invention is specified.
Fig. 2 is an exploded perspective view showing an internal structure of the damper in the first embodiment.
Fig. 3 is a cross-sectional view showing a cross sectional structure of the damper in the first embodiment, and taken along line 3-3 in Fig. 1.
Fig. 4 is a process drawing showing a state before a cap is mounted on a housing in a method for manufacturing the damper in the first embodiment.
Fig. 5 is a process drawing showing a state after the cap is mounted on the housing in the method for manufacturing the damper in the first embodiment.
Fig. 6 is a process drawing showing a state of a first enclosure portion when a viscoelasticity treatment is applied in the method for manufacturing the damper in the first embodiment.
Fig. 7 is a cross-sectional view showing a cross sectional structure of the damper after the assembly for the damper in a second embodiment wherein the damper according to the present invention is specified.
Fig. 8 is a cross-sectional view showing a cross sectional structure of the damper after the assembly for the damper in a third embodiment wherein the damper according to the present invention is specified.
Fig. 9 is a drawing for explaining an application example of the damper to a seat for a modified example wherein the damper according to the present invention is specified.

### Best Modes of Carrying out the Invention

### (First embodiment)

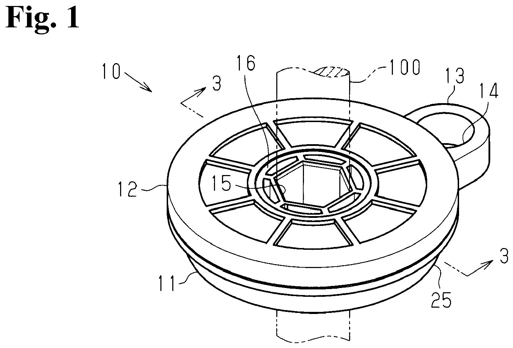

With reference to Fig. 1 to Fig. 6, a damper and a method for manufacturing the damper according to the first embodiment will be explained.

### [Damper 10]

As shown in Fig. 1, a damper 10 is a rotary damper, and comprises a housing 11; a cap 12 closing an opening of the housing 11; and a rotor 16 housed in the housing 11. The housing 11 and the cap 12 are one example as physical objects, and the housing 11, the cap 12, and the rotor 16 are formed by the same principal material. The principal material forming the housing 11, the cap 12, and the rotor 16 may be the same resin material, may be the same metal material, or may be the same alloy material. When the housing 11, the cap 12, and the rotor 16 are formed by the resin material, the principal material is a resin component including the highest mass relative to an entire mass in a mass ratio of a member which becomes the physical object in the resin material included in the physical object. When the housing 11, the cap 12, and the rotor 16 are formed by the metal material, the principal material is a metal component including the highest mass relative to the entire mass in the mass ratio of the member which becomes the physical object. When the housing 11, the cap 12, and the rotor 16 are formed by the alloy material, the principal material is an alloy component including the highest mass relative to the entire mass in the mass ratio of the member which becomes the physical object.

As for the resin material forming the housing 11, the cap 12, and the rotor 16, for example, a thermoplastic resin, a thermosetting resin, an ultraviolet curing resin, and the like can be used. As for the resin material forming the housing 11, the cap 12, and the rotor 16, there is named at least one selected from the group consisting of low density polyethylene, high density polyethylene, polypropylene, polystyrene, polysulfone, acrylonitrile styrene (AS resin), acrylonitrile-butadiene-styrene plastic (ABS), polyacrylonitrile, polyoxymethylene, polyvinyl chloride, polyvinylidene chloride, polyvinylidene fluoride, polytrifluorochloroethylene, polytetrafluoroethylene, polycarbonate, polymethyl methacrylate, polyphenylene oxide, polyethylene terephthalate, polyamide, epoxy resin, and phenol resin. Among those, polyethylene, polyvinyl chloride, polycarbonate, polysulfone, ABS resin, epoxy resin, and phenol resin are preferable from the point that a linear expansion coefficient is small in a thermal property, and elongation is small in a mechanical property. Furthermore, among those, polyethylene, polyvinyl chloride, polycarbonate, polysulfone, and ABS resin are preferable from the point that they are suitable for injection molding.

Incidentally, for a material forming the housing 11, the cap 12, and the rotor 16, in addition to the resin material which is the principal material, there may include various types of additives or unavoidable impurities. As for an additive material, there are named inorganic filler, such as glass fiber, carbon fiber, mineral-based filler, and the like; antioxidant; flame retardant; stabilizer; and the like.

As for the metal material forming the housing 11, the cap 12, and the rotor 16, for example, there is named either one selected from the group consisting aluminum, copper, and iron. Also, as for the alloy material forming the housing 11, the cap 12, and the rotor 16, for example, there are named stainless material wherein a main component thereof is iron, brass which is an alloy of copper and zinc, and an aluminum alloy such as duralumin and the like. Incidentally, for the material forming the housing 11, the cap 12, and the rotor 16, in addition to the metal material which is the principal material, or the alloy material, there may include the various types of additives or the unavoidable impurities as well.

The damper 10 is connected to a support member supporting the damper 10, and connected to an attenuating object which is an object to which a damping force is added by the damper 10 as well. At least one of the housing 11 and the cap 12 is directly or indirectly connected to either one of the attenuating object or the support member. When at least one of the housing 11 and the cap 12 is connected to the attenuating object, the rotor 16 is directly or indirectly connected to the support member. Also, when at least one of the housing 11 and the cap 12 is connected to a support object, the rotor 16 is directly or indirectly connected to the attenuating object. In Fig. 1, there is shown an example wherein the housing 11 is directly connected to the support member, and there is shown an example wherein the rotor 16 is directly connected to the attenuating object.

On an outer peripheral face of a peripheral wall portion 25 provided in the housing 11, an attachment portion 13 projects outwardly in a radial direction in the peripheral wall portion 25, and an attachment hole 14 is formed in the attachment portion 13. The attachment hole 14 is a hole to which a fastening member and the like are fastened, and the fastening member and the like are fastened to the attachment hole 14, so that the damper 10 is fixed in the support member.

At a center of the rotor 16, there is formed a shaft hole 15 passing through the rotor 16. In the shaft hole 15, there is inserted a rotation shaft 100 in a state rotatable relative to the housing 11, and unrotatable relative to the rotor 16. The rotation shaft 100 is the attenuating object to which a braking torque is added from the damper 10.

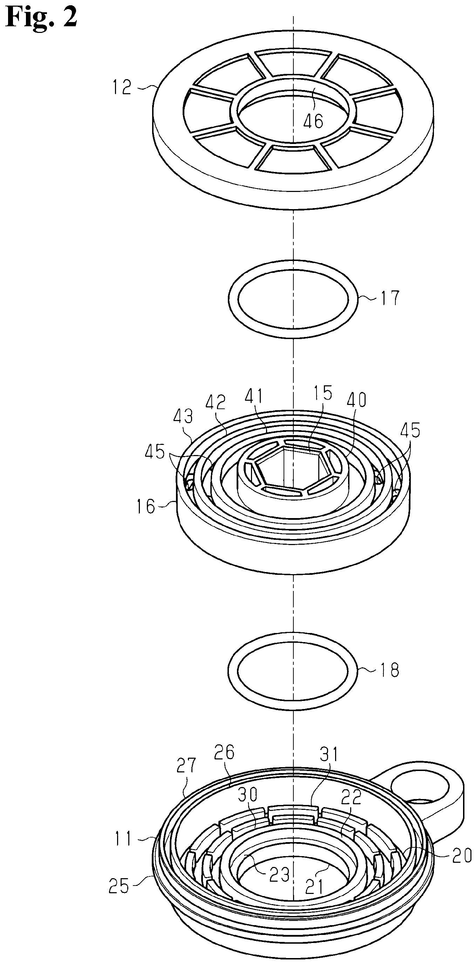

As shown in Fig. 2, the housing 11 is formed in a cylindrical shape including a bottom portion 20. In the bottom portion 20, there are formed a through hole 21 and a center projecting portion 22 having a cylindrical shape surrounding the through hole 21. Inside the center projecting portion 22, there is formed a step portion 23 which is an annular depression facing inwardly in a radial direction in the bottom portion 20 along a whole circumferential direction in the center projecting portion 22. In the step portion 23, there is fitted a seal member 18 having an annular shape formed by an elastic material such as elastomer and the like.

On a cylinder end face of the peripheral wall portion 25 provided in the housing 11, there is concentrically disposed a pair of annular projecting portions 26 and 27 having an annular shape along the peripheral wall portion 25. There is formed a gap between the annular projecting portion 26 positioned on the inner side and the annular projecting portion 27 positioned at the outermost periphery in the pair of annular projecting portions 26 and 27.

In the bottom portion 20 of the housing 11, there are disposed a plurality of inside projecting pieces 30 and a plurality of outside projecting pieces 31 between the peripheral wall portion 25 and the center projecting portion 22. Each of the plurality of inside projecting pieces 30 includes an arc shape viewed from an opening side of the housing 11, and there is formed a gap between the inside projecting piece 30 and another adjacent inside projecting piece 30. The plurality of inside projecting pieces 30 is arranged equally along the circumferential direction of the center projecting portion 22 in such a way as to make one circle around a center of the bottom portion 20.

The outside projecting piece 31 is positioned on the peripheral wall portion 25 side relative to the inside projecting piece 30. The outside projecting piece 31 includes an arc shape viewed from the opening side of the housing 11, and a length along a longitudinal direction of the outside projecting piece 31 is longer than a length along a longitudinal direction of the inside projecting piece 30. There is formed a gap between each of the plurality of outside projecting pieces 31 and another adjacent outside projecting piece 31. The plurality of outside projecting pieces 31 is equally arranged along the circumferential direction of the center projecting portion 22 in such a way as to make one circle around the center of the bottom portion 20 in the same manner as in the plurality of inside projecting pieces 30.

In the housing 11, there is housed the rotor 16, which is one example of a movable member, in a rotatable state in a clockwise direction and a counterclockwise direction. The rotor 16 has a disk shape, and is formed by the same principal material as the housing 11 and the cap 12. The rotor 16 includes a shaft portion 40, which becomes a rotation center of the rotor 16, at the center of the rotor 16. The shaft portion 40 has a cylindrical shape projecting from an upper face of the rotor 16, and there is formed the shaft hole 15 inside the shaft portion 40. The shaft portion 40 is provided in such a way as to project downwardly from a lower face of the rotor 16 as well in addition to the upper face of the rotor 16. The shaft portion 40 projecting from the lower face of the rotor 16 passes through the through hole 21 of the housing 11, and the shaft portion 40 projecting from the upper face of the rotor 16 passes through a through hole 46 of the cap 12. The shaft portion 40 positioned on the upper face of the rotor 16 is inserted into the cap 12 in a turnable state relative to the cap 12, and the shaft portion 40 positioned on the lower face of the rotor 16 is inserted into the housing 11 in a turnable state relative to the through hole 21 of the housing 11. The seal member 18 explained hereinabove is sandwiched between the rotor 16 and the housing 11.

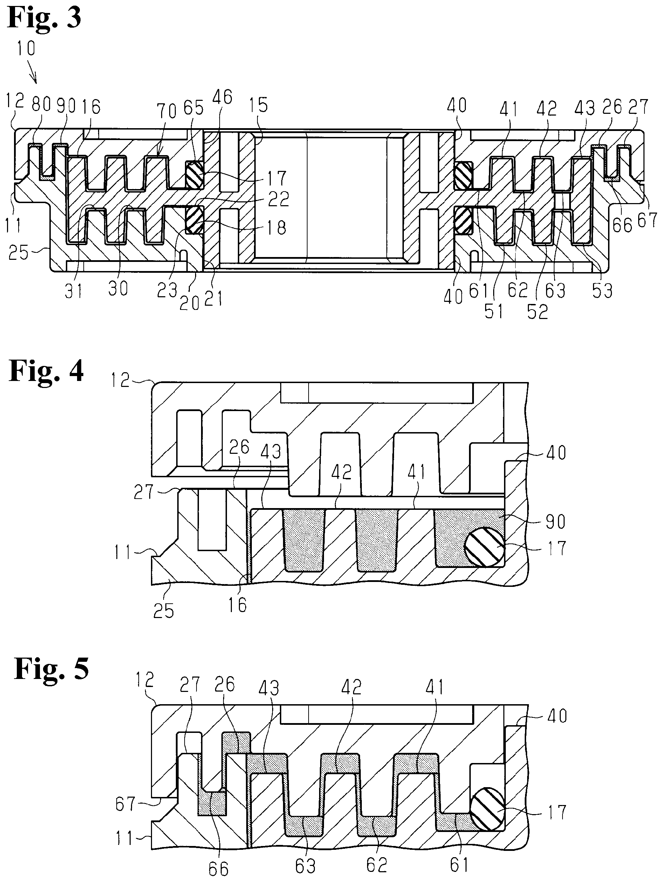

Outside the shaft portion 40 on the upper face of the rotor 16, there are concentrically disposed three upper rotor projecting portions 41 to 43 having an annular shape. Also, outside the shaft portion 40 on the lower face of the rotor 16 as well, there are concentrically disposed three lower rotor projecting portions 51 to 53 (see Fig. 3) having an annular shape. The three upper rotor projecting portions 41 to 43 and the three lower rotor projecting portions 51 to 53 are disposed at a plane-symmetrical position with respect to the upper face of the rotor 16.

Among the three upper rotor projecting portions 41 to 43, there are respectively formed gaps between the upper rotor projecting portion 41 positioned on the innermost periphery and the upper rotor projecting portion 42 positioned at the center, and between the upper rotor projecting portion 42 positioned at the center and the upper rotor projecting portion 43 positioned on the outermost periphery. Also, among the three upper rotor projecting portions 41 to 43, there are respectively formed gaps between the lower rotor projecting portion 51 positioned on the innermost periphery and the lower rotor projecting portion 52 positioned at the center, and between the lower rotor projecting portion 52 positioned at the center and the lower rotor projecting portion 53 positioned on the outermost periphery as well.

There is formed a plurality of communication holes 45 passing through from the upper face of the rotor 16 to the lower face of the rotor 16 between the upper rotor projecting portion 41 positioned on the innermost periphery and the upper rotor projecting portion 42 positioned at the center. Also, there is formed a plurality of communication holes 45 passing through from the upper face of the rotor 16 to the lower face of the rotor 16 between the upper rotor projecting portion 42 positioned at the center and the upper rotor projecting portion 43 positioned on the outermost periphery as well.

The cap 12 has a disk shape, and at a center of the cap 12, there is formed the through hole 46 passing through the cap 12. In the through hole 46, the shaft portion 40 of the rotor 16 passes through. A seal member 17 having an annular shape formed by the elastic material such as elastomer and the like is sandwiched between the cap 12 and the rotor 16.

As shown in Fig. 3, on a lower face of the cap 12, three cap projecting portions 61 to 63 project downwardly. The respective three cap projecting portions 61 to 63 have an annular shape around the center of the cap 12, and are concentrically disposed on the lower face of the cap 12. Among the three cap projecting portions 61 to 63, the cap projecting portion 61 positioned on the innermost periphery fits in a gap of the shaft portion 40 of the rotor 16 and the upper rotor projecting portion 41. Among the three cap projecting portions 61 to 63, the cap projecting portion 62 positioned at the center fits in a gap between the upper rotor projecting portion 41 positioned on the innermost periphery and the upper rotor projecting portion 42 positioned at the center. Among the three cap projecting portions 61 to 63, the cap projecting portion 63 positioned on the outermost periphery fits in a gap between the upper rotor projecting portion 42 positioned at the center and the upper rotor projecting portion 43 positioned on the outermost periphery.

A step portion 65 depressed outwardly in the radial direction is formed between the cap projecting portion 61 positioned on the innermost periphery and the through hole 46. In the step portion 65, there is fitted the seal member 18 explained hereinabove. Also, on the lower face of the cap 12, there is concentrically disposed a pair of cap annular projecting portions 66 and 67 further outside in the radial direction than the cap projecting portion 63 positioned on the outermost periphery. Among the pair of cap annular projecting portions 66 and 67, there is formed a gap between the cap annular projecting portion 66 positioned on the innermost periphery and the cap annular projecting portion 67 positioned on the outermost periphery.

The lower rotor projecting portion 51 positioned on the innermost periphery fits in a gap between the center projecting portion 22 and the inside projecting piece 30 in the housing 11. The lower rotor projecting portion 52 positioned at the center fits in a gap between the inside projecting piece 30 and the outside projecting piece 31. The lower rotor projecting portion 53 positioned on the outermost periphery fits in a gap between the outside projecting piece 31 and the peripheral wall portion 25. The three lower rotor projecting portions 51 to 53 and the housing 11 are in a loose fit, and there is formed a minute gap therebetween. In this minute gap, there is filled a gel-like attenuating medium 90 having both viscosity and elasticity.

The upper rotor projecting portion 41 positioned on the innermost periphery fits in a gap between the cap projecting portion 61 positioned on the innermost periphery and the cap projecting portion 62 positioned at the center. The upper rotor projecting portion 42 positioned at the center fits in a gap between the cap projecting portion 62 positioned at the center and the cap projecting portion 63 positioned on the outermost periphery. The upper rotor projecting portion 43 positioned on the outermost periphery fits in a gap between the cap projecting portion 63 positioned on the outermost periphery and the peripheral wall portion 25.

The three upper rotor projecting portions 41 to 43, the cap 12, and the housing 11 are in a loose fit, and there is formed a minute gap therebetween. In this minute gap, there is filled the aforementioned attenuating medium 90.

Among a space partitioned by the housing 11 and the cap 12, an area positioned outside in the radial direction relative to the shaft portion 40 of the rotor 16 is a rotation area allowing the rotor 16 to rotate. On the other hand, an area formed by the gap between the housing 11 and the rotor 16, and the gap between the cap 12 and the rotor 16 is a torque generating area 70 generating the braking torque. The attenuating medium 90 filled in the torque generating area 70 is sheared by the rotor 16 so as to attenuate a force of rotating the rotor 16.

For example, when the rotor 16 rotates following a rotation of the rotation shaft 100, due to a resistance of the attenuating medium 90 filled in the torque generating area 70, the braking torque which is the damping force is added to the rotation shaft 100. At that time, the attenuating medium 90 firmly adheres on a surface of the rotor 16 in the radial direction of the rotor 16, and in an up-and-down direction of the rotor 16 as well, the attenuating medium 90 firmly adheres on the surface of the rotor 16 through the communication hole 45 formed in the rotor 16. The rotor 16 rotates while shearing the attenuating medium 90 firmly adhered on the surface of the rotor 16. The braking torque is added to the rotation shaft 100 by rotating the rotor 16 while shearing the attenuating medium 90 as well. Incidentally, an area where shear of the attenuating medium 90 occurs is an area sandwiched by a portion from the upper rotor projecting portion 43 positioned on the outermost periphery and the lower rotor projecting portion 53 to the upper rotor projecting portion 41 positioned on the innermost periphery and the lower rotor projecting portion 51, and the housing 11 and the cap 12 which face the aforementioned portion.

Here, a temperature change in an environment wherein the damper 10 is placed directly acts on the housing 11, and indirectly acts on the rotor 16 housed in the housing 11 through the housing 11 and the attenuating medium 90.

At that time, the housing 11 and the cap 12 are formed by the same principal material, so that regarding the size of the gap between the housing 11 and the cap 12, a change due to the temperature change is small. Then, a total of a gap between the housing 11 and the rotor 16 and a gap between the cap 12 and the rotor 16 are approximately maintained so as to enhance stability thereof in the damping force generated by shearing the attenuating medium 90 as well. Moreover, the housing 11 and the rotor 16 are formed by the same principal material, so that regarding the size of the gap between the housing 11 and the rotor 16, the change due to the temperature change is small. Also, the cap 12 and the rotor 16 are formed by the same principal material, so that regarding the size of the gap between the cap 12 and the rotor 16 as well, the change due to the temperature change is small. Therefore, regarding the size of a clearance which is the minute gap between the upper rotor projecting portions 41 to 43 and the cap 12 as well, the change due to the temperature change is small. Also, regarding the size of a clearance which is the minute gap between the lower rotor projecting portions 51 to 53 and the housing 11 as well, the change due to the temperature change is small. As a result, according to the aforementioned damper 10, the change of the size of the clearance is suppressed relative to the temperature change in the environment wherein the damper 10 is placed.

The annular projecting portions 26 and 27 of the housing 11 fit in the cap annular projecting portions 66 and 67. There is formed a minute gap between the annular projecting portions 26 and 27 of the housing 11 and the cap annular projecting portions 66 and 67. This gap functions as an enclosure portion 80 allowing the attenuating medium 90 which becomes excess relative to a volume of the torque generating area 70 to be enclosed together with air. The enclosure portion 80 is positioned outside the rotation area in the radial direction of the shaft portion 40, i.e. outside relative to the torque generating area 70.

The enclosure portion 80 includes a bend structure bending a plurality of times along the up-and-down direction outwardly in the radial direction in the housing 11 from the torque generating area 70, i.e., a labyrinth structure. The enclosure portion 80 is formed annularly along the peripheral wall portion 25 viewed from an upper face side of the cap 12.

### [Attenuating medium 90]

Next, the attenuating medium 90 will be explained.

While exhibiting a property of a solid dynamically, the attenuating medium 90 is a gel-like medium including a three-dimensional network structure including a composition as a liquid. The attenuating medium 90 is a semisolid material wherein a viscoelasticity in a raw material of a liquid member is enhanced so as to reduce fluidity thereof by applying a viscoelasticity treatment which adds the viscoelasticity to the raw material. Alternatively, the attenuating medium 90 is the semisolid material wherein the viscoelasticity is provided relative to a dried gel which is the raw material. When the temperature in the environment wherein the damper 10 is placed changes, the temperature of such attenuating medium 90 changes as well. On the other hand, since the aforementioned attenuating medium 90 is the semisolid material including a gel form, compared to a viscous fluid such as silicone oil and the like, the viscosity in the attenuating medium 90 is difficult to change.

The attenuating medium 90 may be a chemical gel including a strong chemical bond between mediums, or a physical gel including a weak physical assembly between the mediums. The attenuating medium 90 may be a high molecular gel formed by crosslink of a prepolymer which is a one-dimensional polymer, or may be a low molecular gel formed by condensation of a polyfunctional monomer. Also, the attenuating medium 90 may be an organic gel, an inorganic gel, or a particle gel.

A material forming the attenuating medium 90 is, for example, at least one selected from the group consisting of a silicone-based gel, an acrylic gel, a polyolefin-based gel, a polyurethane-based gel, a butadiene gel, an isoprene gel, a butyl gel, a styrene-butadiene gel, an ethylene-vinyl acetate copolymer gel, an ethylene-propylene-diene terpolymer gel, and a fluorine gel. The attenuating medium 90 may be a one-liquid type wherein a raw material of the attenuating medium 90 is one kind of liquid member, may be a two-liquid type wherein the raw material is two kinds of liquid members, or may be a multi-liquid type wherein the raw material is three or more kinds of liquid members.

The viscoelasticity treatment is a treatment for condensing a monomer, or crosslinking the prepolymer, a treatment for forming a network in a dispersoid, or a treatment for turning the dried gel into a gel, and is appropriately selected according to the type of the attenuating medium 90. The viscoelasticity treatment is a treatment wherein at least one of treatments of, for example, adding an initiator for initiating the viscoelasticity; leaving for a predetermined time; heating at a predetermined temperature; contacting moisture in an atmosphere; and a light irradiation of a predetermined wavelength such as a ultraviolet light and the like, is carried out.

For example, in the attenuating medium 90, the viscoelasticity is added by heating from a state wherein a main agent and the initiator are mixed. Incidentally, the main agent may be one type of liquid member, or a plurality of types of liquid members as well. Also, in a case wherein a heat treatment is used for the viscoelasticity treatment in this manner, and the viscoelasticity treatment is applied to the attenuating medium 90 housed in the damper 10, the housing 11, the rotor 16, and the cap 12 are formed by a material having a heat resistance which withstands heating at a heating temperature.

Also, for example, from the state wherein the main agent and the initiator are mixed, the attenuating medium 90 is left for the predetermined time so as to add the viscoelasticity. Also, for example, in the attenuating medium 90, from the state wherein the main agent and the initiator are mixed, light irradiation is applied so as to add the viscoelasticity. Thus, in a case wherein the light irradiation of a specific wavelength is used for the viscoelasticity treatment, and the viscoelasticity treatment is applied to the attenuating medium 90 housed in the damper 10, the housing 11, the rotor 16, and the cap 12 are formed by a material having translucency which transmits the light of the wavelength thereof.

### [Method for manufacturing the damper]

With reference to Fig. 4 to Fig. 6, the method for manufacturing the damper will be explained with procedures of an assembly thereof. Incidentally, in the method for manufacturing the damper shown hereinafter, there is shown an example wherein the raw material of the attenuating medium 90 is the liquid member.

As shown in Fig. 4, the rotor 16 wherein the seal members 17 and 18 are externally fitted is housed in the housing 11. In that state, an upper end of the rotor 16, i.e., tips of the upper rotor projecting portions 41 to 43 are located lower than tips of the annular projecting portions 26 and 27 of the housing 11. Next, the raw material of the attenuating medium 90 before the viscoelasticity treatment is applied is injected into the housing 11. The attenuating medium 90 before the viscoelasticity treatment is applied has a low viscosity and includes the fluidity so as to flow into a minute gap between the housing 11 and the rotor 16.

An injection amount of the raw material of the attenuating medium 90 is more than the volume of the torque generating area 70, and is an amount wherein an amount of the attenuating medium 90 enclosed in the enclosure portion 80 is added. For example, as shown in Fig. 4 as an example, the raw material of the attenuating medium 90 may be filled to an end portion of the upper side of the rotor 16, or the raw material of the attenuating medium 90 may be filled to an upper end of the housing 11. Also, when the attenuating medium 90 is injected into the housing 11, in order to reduce a mixed air amount into the attenuating medium 90, it is preferable to inject the raw material of the attenuating medium 90 under a reduced-pressure atmosphere.

As shown in Fig. 5, subsequently, the cap 12 is mounted on the housing 11 wherein the raw material of the attenuating medium 90 is filled. At that time, the raw material of the attenuating medium 90 located between the shaft portion 40 and the upper rotor projecting portion 41, or in the gaps of the three upper rotor projecting portions 41 to 43, is pushed out when the cap projecting portions 61 to 63 fit in the aforementioned gaps. On the other hand, when the pushed-out raw material of the attenuating medium 90 overflows from the opening of the housing 11, the annular projecting portions 26 and 27 of the housing 11 and the cap annular projecting portions 66 and 67 become a fitting state. Consequently, the pushed-out raw material of the attenuating medium 90 flows between the annular projecting portions 26 and 27 of the housing 11 and the cap annular projecting portions 66 and 67. Incidentally, even when the cap 12 is mounted, it is preferable that the aforementioned treatment is carried out under the reduced-pressure atmosphere.

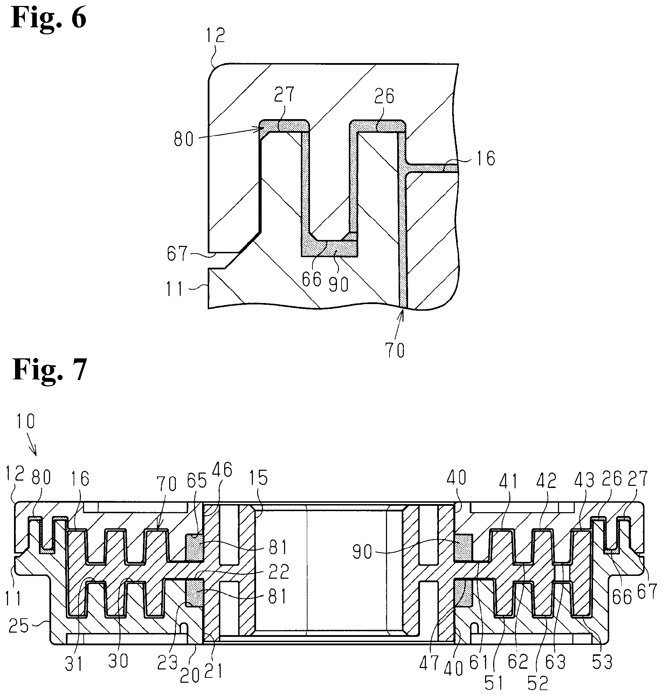

As shown in Fig. 6, when the cap 12 is mounted on the housing 11, in the enclosure portion 80 formed by the annular projecting portions 26 and 27 and the cap annular projecting portions 66 and 67, there is stored the attenuating medium 90 which becomes excess relative to the torque generating area 70. From that state, an outer edge of the cap 12 and an outer edge of the housing 11 are thermally welded.

The seal member 17 externally fitted in the rotor 16 is pushed into a space partitioned by the step portion 65 of the cap 12 and the rotor 16, and seals between the cap 12 and the rotor 16. Also, the seal member 18 externally fitted in the rotor 16 is pushed into a space partitioned by the step portion 23 between the housing 11 and the rotor 16, and seals between the housing 11 and the rotor 16.

Thus, from a state wherein the raw material of the attenuating medium 90 is stored in the enclosure portion 80, the viscoelasticity treatment is applied to the raw material of the attenuating medium 90 inside the damper 10. For example, the raw material of the attenuating medium 90 is heated at a predetermined temperature for a predetermined time so as to add the viscoelasticity to the raw material of the attenuating medium 90, and generate the attenuating medium 90. Incidentally, it is preferable that a difference between a volume of the raw material of the attenuating medium 90 and a volume of the attenuating medium 90 generated from that is small. Then, the viscoelasticity is added to the raw material of the attenuating medium 90 stored in the enclosure portion 80, so that a connecting portion of an edge portion of the cap 12 and a tip of the peripheral wall portion 25 is sealed by the attenuating medium 90. As a result, in the aforementioned connecting portion, the attenuating medium 90 itself functions as the seal member, and it becomes unnecessary for separately interposing a seal member such as a gasket and the like.

Next, an operation of the damper 10 will be explained.

The temperature change in the environment wherein the damper 10 is placed directly acts on the housing 11, and indirectly acts on the rotor 16 housed in the housing 11 through the housing 11 and the attenuating medium 90. At that time, since the housing 11 and the rotor 16 are formed by the same principal material, regarding the size of a clearance between the cap 12 and the rotor 16, and the size of a clearance between the housing 11 and the rotor 16, the change due to the temperature change is small.

On the other hand, the temperature change in the environment wherein the damper is placed acts on the attenuating medium 90 as well in addition to the housing 11, the cap 12, and the rotor 16. In this respect, since the aforementioned attenuating medium 90 is the semisolid material including the gel form, compared to the viscous fluid such as the silicone oil and the like, the viscosity in the attenuating medium 90 is difficult to change. Then, the attenuating medium 90 wherein the viscosity is difficult to change relative to the temperature change is filled in a clearance wherein the size is difficult to change relative to the temperature change likewise, so that regarding the damping force generated by shearing the attenuating medium 90, the stability relative to the temperature change of the environment is enhanced.

Also, in a manufacturing process of the damper 10, the raw material of the attenuating medium 90 is injected to the degree of exceeding the volume of the torque generating area 70, and an excess portion relative to the torque generating area 70 is enclosed in the enclosure portion 80 in advance. Consequently, the torque generating area 70 comes to a state wherein the attenuating medium 90 including the viscoelasticity is filled thoroughly. Also, if the injection amount of the raw material of the attenuating medium 90 is an amount exceeding a capacity of the torque generating area 70, even if there is a variation of the injection amount, a variation of an amount of the attenuating medium filled in the torque generating area 70 is suppressed. Consequently, a variation of an amount of the attenuating medium 90 due to an individual difference of the damper 10 can be suppressed as well. Therefore, air caused by an insufficient injection of the raw material of the attenuating medium 90 can be suppressed from being mixed into the attenuating medium 90 as well.

Also, the attenuating medium 90 including air is enclosed in the enclosure portion 80, but the enclosure portion 80 is provided outside the torque generating area 70 wherein the rotor 16 rotates. Consequently, air enclosed in the enclosure portion 80 is suppressed from being mixed into the torque generating area 70 accompanied by a rotation of the rotor 16. Therefore, the damper 10 can suppress an operational failure caused by air, and generate a stable damping force compared to a damper without the enclosure portion 80.

As explained above, according to the damper and the method for manufacturing the damper in the first embodiment, the following effects can be obtained.
(1) The housing 11 and the cap 12 are formed by the same principal material, and the attenuating medium 90 interposed therebetween is the gel-like semisolid material, so that regarding a total of the damping force generated between the housing 11 and the rotor 16, and between the cap 12 and the rotor 16, the change due to the temperature change of the environment is small. Therefore, the stability is enhanced relative to the temperature change of the damping force in the damper 10.
(2) The housing 11 and the rotor 16 are formed by the same principal material, and the attenuating medium 90 interposed therebetween is the gel-like semisolid material, so that regarding the damping force generated between the housing 11 and the rotor 16, the change due to the temperature change of the environment is small. Therefore, the stability is enhanced relative to the temperature change of the damping force in the damper 10.
   Also, the cap 12 and the rotor 16 are formed by the same principal material, and the attenuating medium 90 interposed therebetween is the gel-like semisolid material, so that regarding the damping force generated between the cap 12 and the rotor 16, the change due to the temperature change of the environment is small. Therefore, the stability is enhanced relative to the temperature change of the damping force in the damper 10.
(3) When the clearance becomes smaller by the temperature change of the environment, there is saved the time of matching the change of the viscosity in the attenuating medium and the change of the size of the clearance at every temperature of the environment so that the viscosity of the attenuating medium becomes smaller at a time of designing the damper 10. Therefore, regarding the housing 11, the cap 12, the rotor 16, and the attenuating medium 90, selections of the respective materials become easy.
(4) Since the housing 11 and the cap 12 are formed by the same principal material, compared to a structure wherein the housing 11 and the cap 12 are simply formed by different materials, strong stability is enhanced regarding welding therebetween.
(5) Since the viscoelasticity treatment is applied after the raw material of the attenuating medium 90 is injected into the housing 11, as for the raw material of the attenuating medium 90, there can be selected the liquid member having the low viscosity and a high fluidity as well. According to the aforementioned selection, a space wherein the attenuating medium 90 is not filled is prevented from being generated in the torque generating area 70. Therefore, a variation of the damping force due to a mixture of air into the torque generating area 70 is suppressed.
(6) Since the enclosure portion 80 includes the bend structure, even in a limited space inside the housing 11, a volume of the enclosure portion 80 can be increased.

### (Second embodiment)

With reference to Fig. 7, the damper and the method for manufacturing the damper according to a second embodiment will be explained with a focus on differences with the first embodiment. Incidentally, the damper and the method for manufacturing the damper according to the second embodiment have a basic structure thereof equal to that of the first embodiment as well, so an overlapping explanation with the first embodiment is omitted.

The damper 10 of the second embodiment differs from the damper 10 of the first embodiment in terms of omitting the seal members 17 and 18, and further comprising enclosure portions between the housing 11 and the shaft portion 40, and between the cap 12 and the shaft portion 40. Hereinafter, the enclosure portion 80 provided between the housing 11 and the cap 12 will be explained as the first enclosure portion 80, and the enclosure portions provided between the housing 11 and the shaft portion 40, and between the cap 12 and the shaft portion 40 will be explained as second enclosure portions 81.

As shown in Fig. 7, the rotor 16 includes an extension portion 47 extending from an outer peripheral face of the shaft portion 40 toward the upper rotor projecting portion 41. The second enclosure portion 81 formed in the damper 10 is partitioned by the step portion 23 of the housing 11, the outer peripheral face of the shaft portion 40, and the extension portion 47. Also, the second enclosure portion 81 is partitioned by the step portion 65 of the cap 12, the outer peripheral face of the shaft portion 40, and the extension portion 47. The respective two second enclosure portions 81 enclose the attenuating medium 90 which becomes excess relative to the torque generating area 70 together with air.

When the damper 10 is manufactured by the method for manufacturing as shown in the first embodiment as an example, the injection amount of the raw material of the attenuating medium 90 injected into the housing 11 is larger than the volume of the torque generating area 70, and is an amount wherein the amount of the attenuating medium 90 for a portion of enclosing into the first enclosure portion 80 and the second enclosure portions 81 is added. Then, when the cap 12 is mounted on the housing 11 wherein the raw material of the attenuating medium 90 is filled, the raw material of the attenuating medium 90 is stored in the second enclosure portion 81 as well in addition to the first enclosure portion 80. Next, from a state wherein the raw material of the attenuating medium 90 is stored in the first enclosure portion 80 and the second enclosure portion 81, the aforementioned viscoelasticity treatment is carried out. Thereby, inside the second enclosure portion 81, the viscoelasticity is added to the raw material of the attenuating medium 90, and the attenuating medium 90 seals between the cap 12 and the shaft portion 40, and between the housing 11 and the shaft portion 40.

The second enclosure portion 81 is disposed in the vicinity of the shaft portion 40 so as not to generate the shear by the rotation of the rotor 16 in the attenuating medium 90 positioned in the second enclosure portion 81. Consequently, even if air is enclosed in the second enclosure portion 81 together with the attenuating medium 90, air thereof is difficult to be mixed in the attenuating medium 90 of the torque generating area 70.

As explained above, with respect to the damper and the method for manufacturing the damper according to the second embodiment, the following effects can be obtained further in addition to the aforementioned effects according to (1) to (6) .
(7) The second enclosure portion 81 is provided in a connecting portion of the housing 11 and the shaft portion 40, and the attenuating medium 90 enclosed in the second enclosure portion 81 seals between the housing 11 and the shaft portion 40. Thereby, the seal member such as the gasket and the like for sealing between the housing 11 and the shaft portion 40 can be omitted.
(8) The second enclosure portion 81 is provided in a connecting portion of the cap 12 and the shaft portion 40, and the attenuating medium 90 enclosed in the second enclosure portion 81 seals between the cap 12 and the shaft portion 40. Thereby, the seal member such as the gasket and the like for sealing between the cap 12 and the shaft portion 40 can be omitted.
(9) Unlike the attenuating medium 90 enclosed in the torque generating area 70, the attenuating medium 90 in the second enclosure portion 81 has a large thickness to the degree that the shear is difficult to occur relative to the attenuating medium 90 itself enclosed in the second enclosure portion 81. Thereby, even in a structure for providing the second enclosure portion 81 between the housing 11 and the rotor 16, or a structure for providing the second enclosure portion 81 between the cap 12 and the rotor 16, a sealing property of the attenuating medium 90 in the second enclosure portion 81 is maintained, and the mixture of air into the torque generating area 70 from the second enclosure portion 81 can be reduced.

### (Third embodiment)

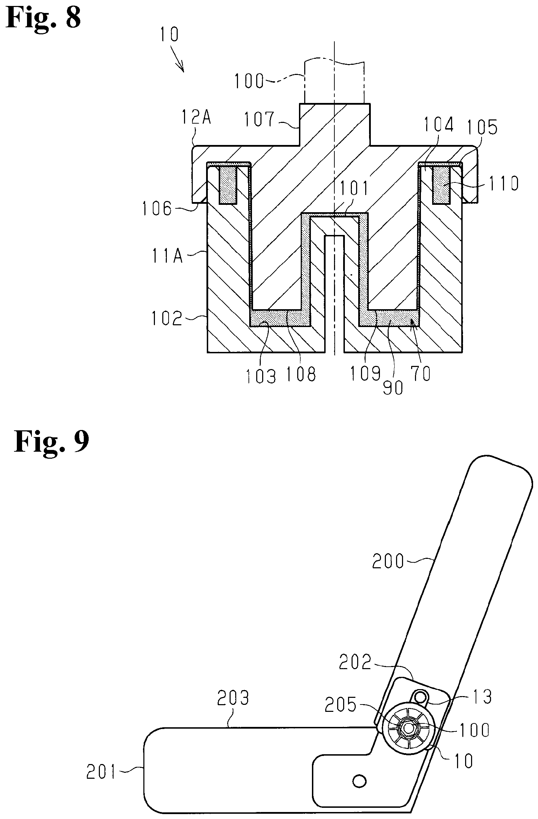

With reference to Fig. 8, the damper and the method for manufacturing the damper in a third embodiment will be explained with a focus on differences with the first embodiment. Incidentally, the damper and the method for manufacturing the damper according to the third embodiment have the basic structure thereof equal to that of the first embodiment as well, so that the overlapping explanation will be omitted.

As shown in Fig. 8, the damper 10 comprises the housing 11A and the cap 12A turnably mounted relative to the housing 11A. The housing 11A and the cap 12A are formed by the same principal material. Materials forming the housing 11A and the cap 12A may be the same resin material, may be the same metal material, or may be the same alloy material as the first embodiment.

The housing 11A is formed in the cylindrical shape including the bottom portion, and at the center portion of the bottom face thereof, there is projected the projecting portion 101 having the cylindrical shape with a lid. Inside the housing 11A, one concave portion 103 is partitioned by the bottom portion of the housing 11A, an outer peripheral face of the projecting portion 101, and an inner peripheral face of the peripheral wall portion 102. Incidentally, the housing 11A may include another projecting portion having the cylindrical shape projecting from the bottom portion between the projecting portion 101 and the peripheral wall portion 102, and the concave portion 103 may be partitioned with a plurality of portions by the aforementioned another projecting portion.

In a cylinder end face of the peripheral wall portion 102, there is formed the pair of annular projecting portions 104 and 105. There is formed a gap between the annular projecting portion 104 positioned on the inner side and the annular projecting portion 105 positioned on the outer side in the pair of annular projecting portions 104 and 105. Incidentally, the cylinder end face of the peripheral wall portion 102 may include another annular projecting portion in the gap between those annular projecting portions 104 and 105, and the gap of the annular projecting portions 104 and 105 may be partitioned with two or more as well.

The cap 12A includes the shaft connection portion 107 connecting the turning shaft 100. The cap 12A is formed in the disk shape, and the edge portion 106 provided in the cap 12A bends at the right angle toward the housing 11. On the lower face of the cap 12A, the pair of cap projecting portions 108 and 109 projects toward the bottom face of the housing 11A.

In a gap between an inner surface of the housing 11A and outer surfaces of the cap projecting portions 108 and 109, the torque generating area 70 is partitioned, and in the torque generating area 70, the attenuating medium 90 is filled. When the cap 12A rotates, the attenuating medium 90 filled in the torque generating area 70 is sheared.

The gap between the pair of annular projecting portions 104 and 105 is covered by the lower face of the cap 12A. The enclosure portion 110 is partitioned by portions positioned outside the cap projecting portions 108 and 109, and the annular projecting portions 104 and 105 in the lower face of the cap 12, and the attenuating medium 90 is filled in the enclosure portion 110 as well. In the enclosure portion 110 positioned outside the torque generating area 70, when the cap 12A rotates, the attenuating medium 90 filled in the enclosure portion 110 thereof is not sheared.

Next, the method for manufacturing the damper 10 will be explained with the procedures of the assembly thereof. Incidentally, in the method for manufacturing the damper shown hereinafter as well, there is shown an example wherein the raw material of the attenuating medium 90 is the liquid member.

First, the raw material of the attenuating medium 90 before the viscoelasticity treatment is applied is injected into the housing 11. Next, the cap 12 is mounted on the housing 11 filled by the raw material of the attenuating medium 90. At that time, the cap projecting portions 108 and 109 fit in the concave portion 103 so that the attenuating medium 90 injected into the concave portion 103 of the housing 11 is pushed out of the concave portion 103. The raw material of the pushed-out attenuating medium 90 flows into the gap of the pair of annular projecting portions 104 and 105.

When the cap 12A is mounted on the housing 11A, the raw material of the attenuating medium 90 which becomes excess relative to the torque generating area 70 is stored in the gap between the pair of annular projecting portions 104 and 105. From that state, an outer edge of the cap 12A and an outer edge of the housing 11A are thermally welded. Then, in a state wherein the raw material of the attenuating medium 90 which becomes excess relative to the torque generating area is stored in the enclosure portion 110, the viscoelasticity treatment is applied to the raw material of the attenuating medium 90. As a result, the viscoelasticity is added to the raw material of the attenuating medium 90 positioned in the torque generating area 70 and the enclosure portion 110. The raw material of the attenuating medium 90 stored in the enclosure portion 110 encloses air together with the attenuating medium, however, since the enclosure portion 110 is positioned outside the torque generating area 70, even if the cap 12A rotates, the mixture of air into the torque generating area 70 is suppressed.

As explained above, with respect to the damper and the method for manufacturing the damper according to the third embodiment, the following effect can be obtained further in addition to the aforementioned effect according to (5).
(10) The housing 11A and the cap 12A are formed by the same principal material, and the attenuating medium 90 interposed therebetween is the gel-like semisolid material, so that regarding the damping force generated between the housing 11A and the cap 12A, the change due to the temperature change of the environment is small. Therefore, the stability is enhanced relative to the temperature change of the damping force in the damper 10.

### (Other embodiments)

Incidentally, the aforementioned respective embodiments can be carried out by modifying as follows as well.

The enclosure portion 80 may have the straight flow channel communicating with the torque generating area 70. Basically, the enclosure portion 80 can be modified provided that the enclosure portion 80 is the space communicating with the torque generating area 70, and that even if the attenuating medium 90 inside the torque generating area 70 moves accompanied by the movement of the movable member in the torque generating area 70, the enclosure portion 80 is the space which can suppress the attenuating medium 90 from moving out to the torque generating area 70 or entering from the torque generating area 70.

The shape of the rotor 16 may have a structure member without the concave-convex structure fitting the cap 12 and the housing 11, for example, a structure member including the flat plate shape.

The cap 12 can be modified provided that the cap 12 includes a structure closing the opening of the housing 11, and in the damper 10, the cap 12 may have the structure wherein the cap 12 is internally fitted in the housing 11 as well.

The enclosure portions 80, 81, and 110 may be omitted from the damper 10. Even in the aforementioned structure, the aforementioned effects according to (1) to (4), and (10) can be obtained.

In the first embodiment and the second embodiment, the housing 11 and the rotor 16 may be formed by materials different from each other. Also, the cap 12 and the rotor 16 may be formed by materials different from each other. Basically, they may be formed by materials different from each other provided that the housing and the cap are the physical objects, the attenuating medium is filled between the physical objects and the movable member, and the housing 11 and the cap 12 are formed by the same principal material.

In the first embodiment and the second embodiment, the cap and the housing may be fixed to each other through fastening by the fastening member or pressure bonding.

The damper rotates while shearing the attenuating medium added with the viscoelasticity so as to generate the damping force. Consequently, the damper can generate the damping force sufficient to buffer an impact accompanied by a turning movement of a seat back as well.

With reference to Fig. 9, an application example of the damper to a seat will be explained. The damper 10 which is a damper for seat forms a turning mechanism for turning a seat back 200 which is a backrest relative to a seat cushion 201 including a seating surface. The turning mechanism is a reclining mechanism fixing the seat back 200 in a state of being reclined to a side opposite to the seat cushion 201, or a folding mechanism folding the seat back 200 in such a way as to contact the seating surface 203. The attachment portion 13 of the damper 10 is fastened relative to a connection portion 202 provided in the seat back 200 by the fastening member such as a screw and the like. The turning shaft 100 turnably supporting the seat back 200 is inserted through the shaft hole 15 (see Fig. 1) which is one example of the shaft connection portion in the damper 10, and a fastening portion 205 such as a nut and the like is fastened to a tip of the turning shaft 100. When the seat back 200 turns to a seat cushion 201 side or an opposite side thereof around the turning shaft 100, the damper 10 adds the damping force to the turning shaft 100, and buffers the impact accompanied by the turning movement of the seat back 200. Incidentally, the seat and the turning mechanism thereof may have a structure other than the structure shown in Fig. 9.

### Explanation of Symbols

10 ... a damper, 11, 11A, and 11B ... a housing, 12 and 12A ... a cap, 16 ... a rotor, 70 ... a torque generating area, 80 ... a first enclosure portion, 81 ... a second enclosure portion, 90 ... an attenuating medium, and 110 ... an enclosure portion.

## Claims

1. A damper (10), comprising:
a housing (11) wherein an opening is formed;
a cap (12) closing the opening of the housing (11);
a movable member movably housed between the housing (11) and the cap (12); and
a gel-like attenuating medium (90) filled in a movable area of the movable member inside the housing (11),
wherein the housing (11) and the cap (12) are physical objects,
the attenuating medium (90) is filled between the physical objects and the movable member, and
the housing (11) and the cap (12) are formed by a same principal material,
said damper (10) being **characterized by** further comprising an enclosure portion (80) including a bend structure bending a plurality of times along an up-and-down direction and located outwardly in a radial direction in the housing (11) from a torque generating area (70), and
the enclosure portion (80) is formed annularly along a peripheral wall portion (25) viewed from an upper face side of the cap (12).

2. A damper according to claim 1, wherein the cap (12) is welded to the housing (11).

3. A damper according to claim 1, wherein the cap (12), the housing (11), and the movable member are formed by the same principal material.

4. A damper according to any one of claims 1 to 3, wherein a principal material forming the movable member includes a linear expansion coefficient equal to the principal material forming the housing (11) and the cap (12).

5. A damper according to any one of claims 1 to 4, wherein the attenuating medium (90) is a silicone gel, and the same principal material is any one of a thermoplastic resin, a thermosetting resin, and an ultraviolet curing resin.

6. A damper according to any one of claims 1 to 5, wherein a mechanism of turning a seat back (200) relative to a seat cushion (201) is a turning mechanism,
the damper (10) further comprising a shaft connection portion (202) connected to a rotation shaft (100) provided in the turning mechanism.

7. A method for manufacturing the damper (10) wherein a housing (11) in which an opening is formed, and a cap (12) formed by a same principal material as the housing and closing the opening, are physical objects, comprising:
a process for housing a movable member inside the housing (11), filling a raw material for an attenuating medium (90) between the physical objects and the movable member, closing the opening by covering the cap (12) on the opening of the housing (11), and housing the movable member between the housing (11) and the cap (12); and
a process for forming the attenuating medium (90) by adding viscoelasticity to the raw material inside the housing (11) by a viscoelasticity treatment which is at least one of either leaving for a required time or an ultraviolet irradiation
said method being **characterized in that** when the cap (12) is mounted on the housing (11), in an enclosure portion (80) formed by annular projecting portions (26, 27) and cap annular projecting portions (66, 67), there is stored the attenuating medium (90) which becomes excess relative to a torque generating area (70), and an outer edge of the cap (12) and an outer edge of the housing (11) are thermally welded.

## Patentansprüche

1. Dämpfer (10), umfassend:
ein Gehäuse (11), in dem eine Öffnung ausgebildet ist;
eine Kappe (12), die die Öffnung des Gehäuses (11) verschließt;
ein bewegliches Element, das zwischen dem Gehäuse (11) und der Kappe (12) bewegbar untergebracht ist; und
ein gelartiges Dämpfungsmedium (90), das in einen beweglichen Bereich des beweglichen Elements im Inneren des Gehäuses (11) eingefüllt ist,
wobei das Gehäuse (11) und die Kappe (12) physikalische Objekte sind,
wobei das Dämpfungsmedium (90) zwischen den physikalischen Objekten und dem beweglichen Element eingefüllt ist, und
das Gehäuse (11) und die Kappe (12) aus demselben Grundmaterial bestehen,
wobei der Dämpfer (10) **dadurch gekennzeichnet ist, dass** er ferner einen Umhüllungsabschnitt (80) umfasst, der eine Biegestruktur enthält, die mehrfach entlang einer Auf- und Abwärtsrichtung gebogen ist und von einem Drehmomenterzeugungsbereich (70) in einer radialen Richtung in dem Gehäuse (11) nach außen angeordnet ist, und
der Umhüllungsabschnitt (80) ist ringförmig entlang eines Umfangswandabschnitts (25), von einer oberen Stirnseite der Kappe (12) aus gesehen, ausgebildet.

2. Dämpfer nach Anspruch 1, wobei die Kappe (12) mit dem Gehäuse (11) verschweißt ist.

3. Dämpfer nach Anspruch 1, wobei die Kappe (12), das Gehäuse (11) und das bewegliche Element aus demselben Grundmaterial gebildet sind.

4. Dämpfer nach einem der Ansprüche 1 bis 3, wobei ein Grundmaterial, das das bewegliche Element bildet, einen linearen Ausdehnungskoeffizienten aufweist, der demjenigen des Grundmaterials gleicht, aus dem das Gehäuse (11) und die Kappe (12) gebildet sind.

5. Dämpfer nach einem der Ansprüche 1 bis 4, wobei das Dämpfungsmedium (90) ein Silikongel ist und das gleiche Grundmaterial eines der folgenden ist: ein thermoplastisches Harz, ein wärmeaushärtendes Harz und ein durch Bestrahlen mit UV-Licht härtendes Harz.

6. Dämpfer nach einem der Ansprüche 1 bis 5, wobei ein Mechanismus zum Drehen einer Sitzlehne (200) relativ zu einem Sitzkissen (201) ein Drehmechanismus ist,
wobei der Dämpfer (10) ferner einen Wellenverbindungsabschnitt (202) umfasst, der mit einer in dem Drehmechanismus vorgesehenen Drehwelle (100) verbunden ist.

7. Verfahren zur Herstellung des Dämpfers (10), bei dem ein Gehäuse (11), in dem eine Öffnung ausgebildet ist, und eine Kappe (12), die aus dem gleichen Hauptmaterial wie das Gehäuse gebildet ist und die Öffnung verschließt, physische Gegenstände sind, umfassend:
ein Verfahren zum Unterbringen eines beweglichen Elements im Inneren des Gehäuses (11), zum Einfüllen eines Rohmaterials für ein Dämpfungsmedium (90) zwischen den physikalischen Gegenständen und dem beweglichen Element, zum Verschließen der Öffnung durch Abdecken der Kappe (12) auf der Öffnung des Gehäuses (11), und zum Unterbringen des beweglichen Elements zwischen dem Gehäuse (11) und der Kappe (12); und
ein Verfahren zum Bilden des Dämpfungsmediums (90) durch Hinzufügen von Viskoelastizität zu dem Rohmaterial im Inneren des Gehäuses (11) durch eine Viskoelastizitätsbehandlung, durch Ruhenlassen während einer erforderlichen Zeit und/oder durch eine Ultraviolettbestrahlung,
wobei das Verfahren **dadurch gekennzeichnet ist, dass**, wenn die Kappe (12) auf dem Gehäuse (11) montiert ist, in einem Umhüllungsabschnitt (80), der durch einen ringförmigen vorstehenden Abschnitt (26, 27) und einen ringförmigen vorstehenden Abschnitt (66, 67) der Kappe gebildet wird, das Dämpfungsmedium (90) gespeichert wird, das relativ zu einem Drehmomenterzeugungsbereich (70) überschüssig wird, und indem ein äußerer Rand der Kappe (12) und ein äußerer Rand des Gehäuses (11) thermisch verschweißt werden.

## Revendications

1. Amortisseur (10), comprenant :
un boîtier (11) dans lequel une ouverture est formée ;
un couvercle (12) fermant l'ouverture du boîtier (11) ;
un élément mobile logé de manière mobile entre le boîtier (11) et le couvercle (12) ; et
un agent amortisseur de type gel (90) rempli dans une zone mobile de l'élément mobile à l'intérieur du boîtier (11) ,
en ce que le boîtier (11) et le couvercle (12) sont des objets physiques,
l'agent amortisseur (90) est rempli entre les objets physiques et l'élément mobile, et
le boîtier (11) et le couvercle (12) sont formés par un même matériau principal,
ledit amortisseur (10) étant **caractérisé en ce qu'**il comprend en outre une partie d'enveloppe (80) comportant une structure de flexion se pliant une pluralité de fois suivant un sens ascendant et descendant et située à l'extérieur dans un sens radial du boîtier (11) à partir d'une zone génératrice de couple (70), et
la partie d'enveloppe (80) est formée de manière annulaire le long d'une partie de paroi périphérique (25) vue depuis un côté de face supérieure du couvercle (12).

2. Amortisseur selon la revendication 1, en ce que le couvercle (12) est soudé au boîtier (11).

3. Amortisseur selon la revendication 1, en ce que le couvercle (12), le boîtier (11) et l'élément mobile sont formés par le même matériau principal.

4. Amortisseur selon l'une des revendications 1 à 3, en ce qu'un matériau principal formant l'élément mobile présente un coefficient de dilatation linéaire égal au matériau principal formant le boîtier (11) et le couvercle (12).

5. Amortisseur selon l'une des revendications 1 à 4, en ce que l'agent amortisseur (90) est un gel de silicone, et le même matériau principal peut être une résine thermoplastique, une résine thermodurcissable et une résine durcissable par ultraviolets.

6. Amortisseur selon l'une des revendications 1 à 5, en ce qu'un mécanisme permettant la rotation d'un dossier de siège (200) par rapport à une assise de siège (201) est un mécanisme de rotation,
l'amortisseur (10) comprenant en outre une partie de connexion d'arbre (202) reliée à un arbre de rotation (100) prévu dans le mécanisme de rotation.

7. Procédé de fabrication de l'amortisseur (10), en ce qu'un boîtier (11) dans lequel une ouverture est formée, et un couvercle (12) formé par un même matériau principal que le boîtier et fermant l'ouverture, sont des objets physiques comprenant :
un procédé pour loger un élément mobile à l'intérieur du boîtier (11), remplir une matière brute pour un agent amortisseur (90) entre les objets physiques et l'élément mobile, fermer l'ouverture en recouvrant le couvercle (12) sur l'ouverture du boîtier (11), et loger l'élément mobile entre le boîtier (11) et le couvercle (12) ; et
un procédé pour former l'agent amortisseur (90) en ajoutant de la viscoélasticité à la matière brute à l'intérieur du boîtier (11) par un traitement de viscoélasticité qui est au moins soit un abandon pendant un temps requis ou une irradiation par ultraviolets
ledit procédé étant **caractérisé en ce que** lorsque le couvercle (12) est monté sur le boîtier (11), dans une partie d'enveloppe (80) formée par des parties saillantes annulaires (26, 27) et des parties saillantes annulaires de couvercle (66, 67), est stocké l'agent amortisseur (90) qui devient excédentaire par rapport à une zone génératrice de couple (70), et un bord extérieur du couvercle (12) et un bord extérieur du boîtier (11) sont thermosoudés.
